## Europäisches Patentamt
## European Patent Office
## Office européen des brevets

(19)

(11) Publication number: **0 195 677**
**A2**

(12) # EUROPEAN PATENT APPLICATION

(21) Application number: 86302074.9

(22) Date of filing: 20.03.86

(51) Int. Cl.⁴: **B 23 D 21/00**
**B 23 D 25/04**

(30) Priority: 20.03.85 JP 39004/85

(43) Date of publication of application:
24.09.86 Bulletin 86/39

(84) Designated Contracting States:
**DE FR GB**

(71) Applicant: **HOKKAI CAN CO., LTD.**
2-2-2, Marunouchi
Chiyoda-ku Tokyo(JP)

(71) Applicant: **NASUKO KABUSHIKI KAISHA**
No 4-19-3 Minami Naruse
Machida-shi Tokyo(JP)

(72) Inventor: **Shinomiya, Tsutomu**
No. 67-213, Teinekanayama Nishi-ku
Sapporo-shi Hokkaido(JP)

(72) Inventor: **Hayashi, Shigeki**
No. 4-40-2, Koenji Kita
Suginami-ku Tokyo(JP)

(74) Representative: **MacFarlane, John Anthony**
**Christopher et al,**
HASELTINE LAKE & CO. Hazlitt House 28, Southampton
Buildings Chancery Lane
London WC2A 1AT(GB)

(54) Apparatus for cutting an elongate member.

(57) The present invention provides an apparatus for cutting
an elongate member, the apparatus comprising a plurality of
cutter carriers (3) which are distributed longitudinally of the
elongate member, the elongate member and the cutter
carriers (3) being movable in the axial direction of the
elongate member while cutters (1) on the cutter carriers (3)
are operative to cut the elongate member, characterised in
that an electric motor (19) is provided for displacing the
cutter carriers, and electronic control means (23) is provided
for controlling the motor such that, in use of the apparatus to
cut an elongate member, the cutters are made operative
when the cutters and the elongate member are in predetermined relative positions and, when the elongate member
has been cut, the cutter carriers are returned to their original
positions.

The invention allows more accurate cutting of the
elongate member, reducing waste, and is also more reliable,
smaller, and cheaper.

./...

FIG. 2

# APPARATUS FOR CUTTING AN ELONGATE MEMBER

·This invention relates to an apparatus for cutting an elongate member, and, in particular to an apparatus such that an elongate member made of a raw material, which is being conveyed continuously, is cut by cutting blades moving at the same speed as the raw material member in order to obtain a large number of tubular sections from the raw material member.

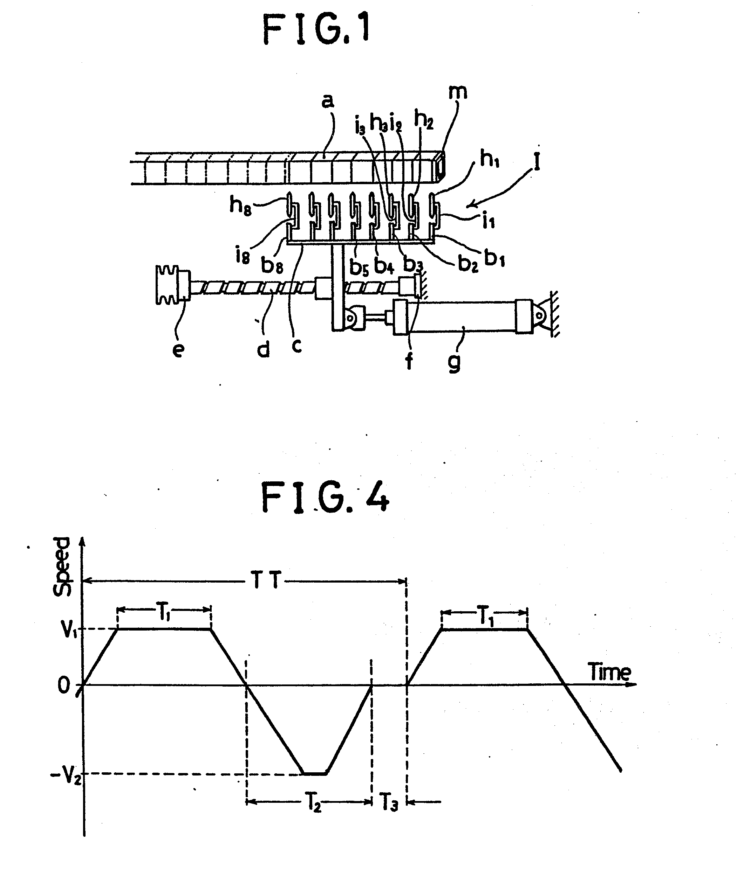

A known example of this kind of apparatus will be explained with reference to Figure 1 of the accompanying drawings:-

Each of a plurality of annular cutting blade carrying members $i_1$....$i_8$ has a set of circularly disposed cutting blades $h_1$, $h_1$, $h_2$, $h_2$...... $h_8$, $h_8$ which are disposed around a raw material member for tubular container barrels (called hereinafter simply "a raw material member"), which is to be moved continuously in the direction of an arrow. Each set of the cutting blades $h_1$.... $h_8$ is rotatably supported on one of a series of base plates $b_1$, $b_2$ ... $b_8$ and the base plates ($b_1$, $b_2$ ..... $b_8$) are disposed along the axial direction of the raw material member $\underline{a}$, the separation between each adjacent pair of base plates corresponding to a desired length of each of the tubular container barrels to be obtained. A member c for interconnecting these base plates $b_1$, $b_2$ ........ $b_8$ is in threaded engagement with a screw rod and additionally is connected to an air cylinder g, the screw rod d being connected through a clutch e to an electric motor (not illustrated) serving to move the raw material member $\underline{a}$ and being connected to a brake f.

This arrangement is so operated that, when a forward end of the raw material member $\underline{a}$ which is being moved forwards goes ahead of the cutting blade $h_1$ on the forward end of the base plate $b_1$ at its start position by a predetermined marginal length m, a limit switch (not illustrated) is closed by means of a plate member arranged to be deflected by its contact with the forward end of the raw material member $a$; thereby the clutch e is operated to cause the base plates $b_1$ ..... $b_8$ to move in the same direction as the direction of motion of the raw material member $a$. Further, the carrying members are rotated and the cutting blades are inclined to be brought into pressure contact with the raw material member $a$ in order to cut it into tubular container barrels. When this has been done, the clutch e is made inoperative and the brake f is operated to stop the base plates $b_1$ ..... $b_8$. Thereafter, under the inoperative conditions of the clutch e and the brake f, the air cylinder g is operated to return the base plates $b_1$ ...... $b_8$ to their start positions.

Thus, by repetition of the foregoing operation of this apparatus, a large number of tubular container barrels can be manufactured continuously from the elongate raw material member.

With the foregoing conventional apparatus, however, engagement of the clutch causes an impact to be applied to the carrying members, so that the apparatus is liable to break down. Additionally, the operation of the clutch e may not be consistent, for example as a result of variation in the surface condition of a friction plate thereof, and consequently the points of contact of the cutting blades on the raw material member $a$ are liable to be altered significantly.

Accordingly, as shown in Fig. 1, the cutting blade $h_1$ of the base plate $b_1$ at the extreme right in this Figure is set in position at a position which is located behind the forward end of the raw material member $a$ by a marginal length m in anticipation of an inaccuracy as described above, so that there are obtained a large number of waste marginal cuttings resulting from the repeated cutting of the raw material member a. Additionally, the whole of the apparatus is heavy, so that, to return the carrying members at a high speed to their start positions, a large network of pipes for supplying air to the air cylinder g and means for shock absorbing must be made, which makes the apparatus tall.

This invention seeks to provide an apparatus for cutting an elongate member that is more reliable and may be made small in size and inexpensively, while reducing the amount of raw material which is wasted.

According to this invention, there is provided an apparatus for cutting an elongate member, the apparatus comprising a plurality of cutter carriers which are distributed longitudinally of the elongate member, the elongate member and the cutter carriers being movable in the axial direction of the elongate member while cutters on the cutter carriers are operative to cut the elongate member, characterised in that an electric motor is provided for displacing the cutter carriers, and electronic control means is provided for controlling the motor such that, in use of the apparatus to cut an elongate member, the cutters are made operative when the cutters and the elongate member are in predetermined relative positions and, when the elongate member has been cut, the cutter carriers are returned to their original positions.

Preferably, the motor drives the cutter carriers through a rack and pinion transmission.

In preferred embodiments, the electronic control means comprises:

a thyristor controller;

first displacement monitoring means, adapted to deliver a first displacement signal representing displacement of the elongate member;

second displacement monitoring means, adapted to deliver a second displacement signal representing displacement of the cutters;

first velocity monitoring means, adapted to deliver a first velocity signal representing the velocity of the elongate member; and

second velocity monitoring means, adapted to deliver a second velocity signal representing the velocity of the cutters;

each displacement monitoring means comprising a counter for counting encoder output signals, wherein each encoder output signal corresponds to a predetermined displacement, and each velocity monitoring means comprising a frequency-voltage converter for generating an output voltage corresponding to the frequency of the encoder output signals.

In further preferred embodiments of the present invention, the electronic control means comprises a cutting length setting means and a first adder for delivering an output corresponding to the difference between the first displacement signal and the sum of the second displacement signal and a predetermined cutting length signal delivered by the cutting length setting means;

a second adder for delivering an output corresponding to the difference between the first velocity signal and the output of the first adder; and

a changeover switch responsive to the polarity of the output of the second adder for providing an output which corresponds either to the output of the second adder or to the second displacement signal, the electronic control means further comprising a third adder for providing an output corresponding to the difference between the output of the changeover switch and the second velocity signal.

Preferably, the cutters are made operative when the difference between the first and second displacement signals is equal to the predetermined cutting length signal, and the first and second velocity signals are equal.

For a better understanding of the present invention, and to show how it may be carried into effect, reference will now be made, by way of example, to the accompanying drawings, in which:-

Fig. 1 is a diagram showing a conventional apparatus;

Fig. 2 is a front view of one embodiment of an apparatus according to this invention;

Fig. 3 is a sectional view taken along the lines III-III in Fig. 2;

Fig. 4 is a diagram for explaining the operation thereof, and

Fig. 5 is a block diagram of an important portion thereof.

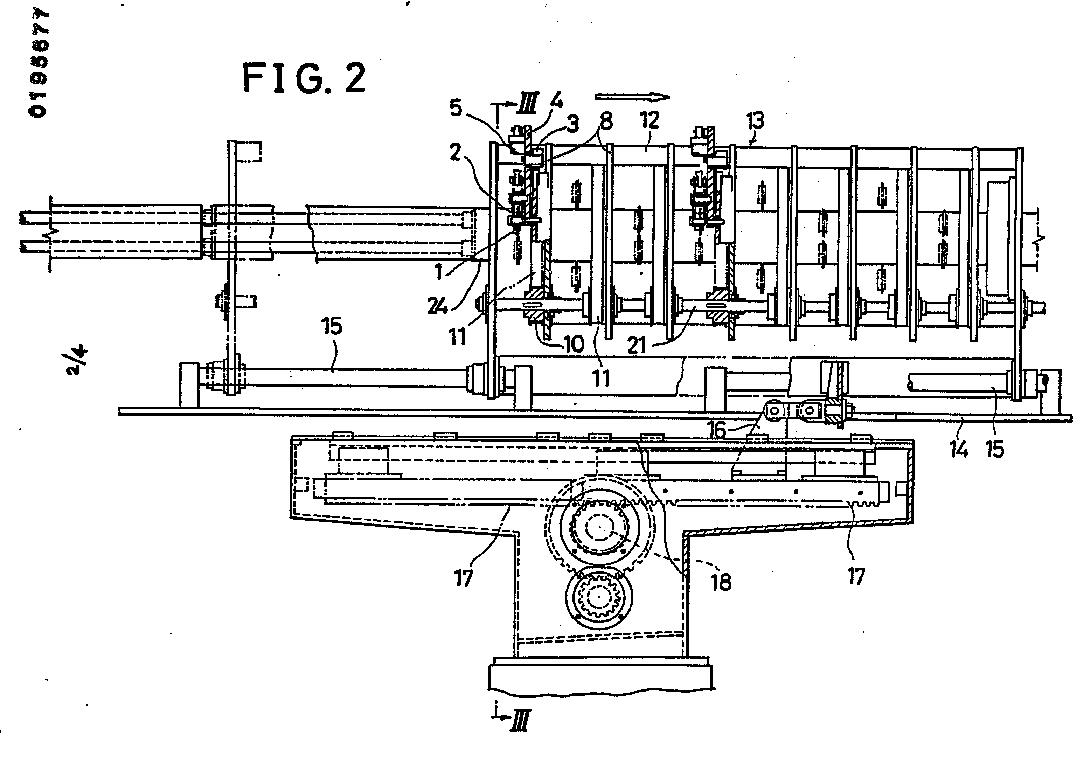

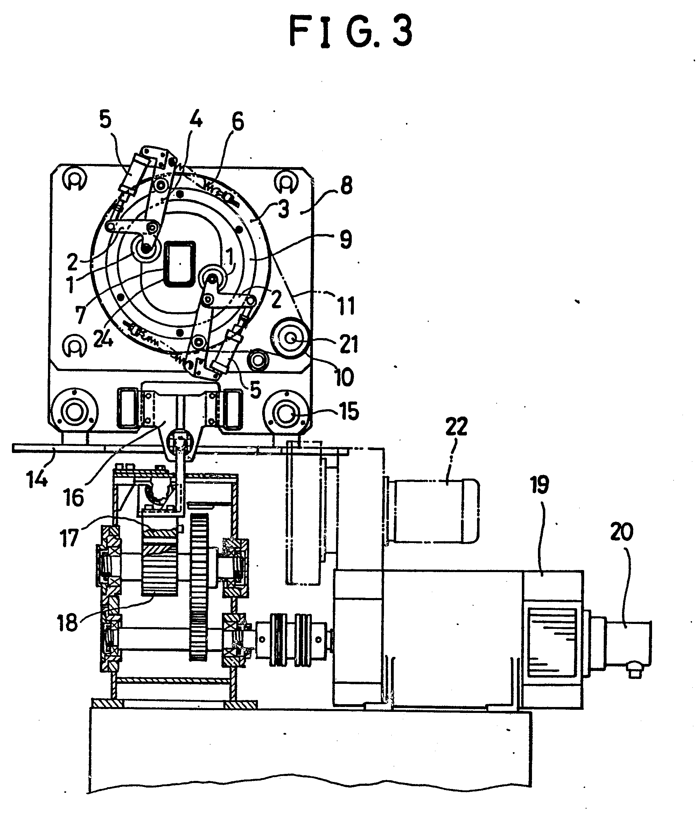

Referring to Figs. 2 and 3, numeral 1 denotes each of the plurality of rotary cutting blades disposed on each of annular cutting blade carrying members 3. Each cutting blade 1 is rotatably supported on one end portion of a spoke member 2; the spoke member 2 is tiltably supported on one end portion of a rod member 4, which is rotatably supported on the cutting blade carrying member 3; an air cylinder 5 is connected between the other end portion of the rod member 4 and the other end portion of the spoke member 2; and a spring 6 is interposed between the other end portion of the rod member 4 and the cutting blade carrying member 3. Thus, the cutting blade 1 is so arranged as to be in an ordinary inoperative condition, located at the illustrated position in relation to a raw material member 24 to be placed on an anvil 7, and be, in its operative condition, brought into pressure contact with the raw material member by expansion of the air

0195677

cylinder 5 in order to cut the raw material member into tubular container barrels.

The cutting blade carrying member 3 is rotatably supported on a supporting plate 8 through a ring 9 fixed to the plate 8, and is arranged to be rotated, via a belt 11, by means of a pulley 10 which is supported on a shaft on the supporting plate 8. In the illustrated example, eight such supporting plates 8 are disposed through spacer members 12 along the axial direction of the raw material member in such a manner that the interval between adjacent cutting blades 1 is equal to the desired length of each of the tubular container barrels to be produced, and supporting plates 8 are interconnected to form an assembly 13, and the assembly 13 is supported slidably along a shaft 15 fixedly provided on a base plate 14.

The foregoing pulleys 10 are arranged to be rotated by an electric motor (not illustrated) for rotating a common shaft 21, and the anvil 7 is positioned at the center of the carrying members 3 and is so arranged to be moved to reciprocate in accordance with a reciprocating movement of the assembly 13.

The above construction is not especially different from that of the conventional example.

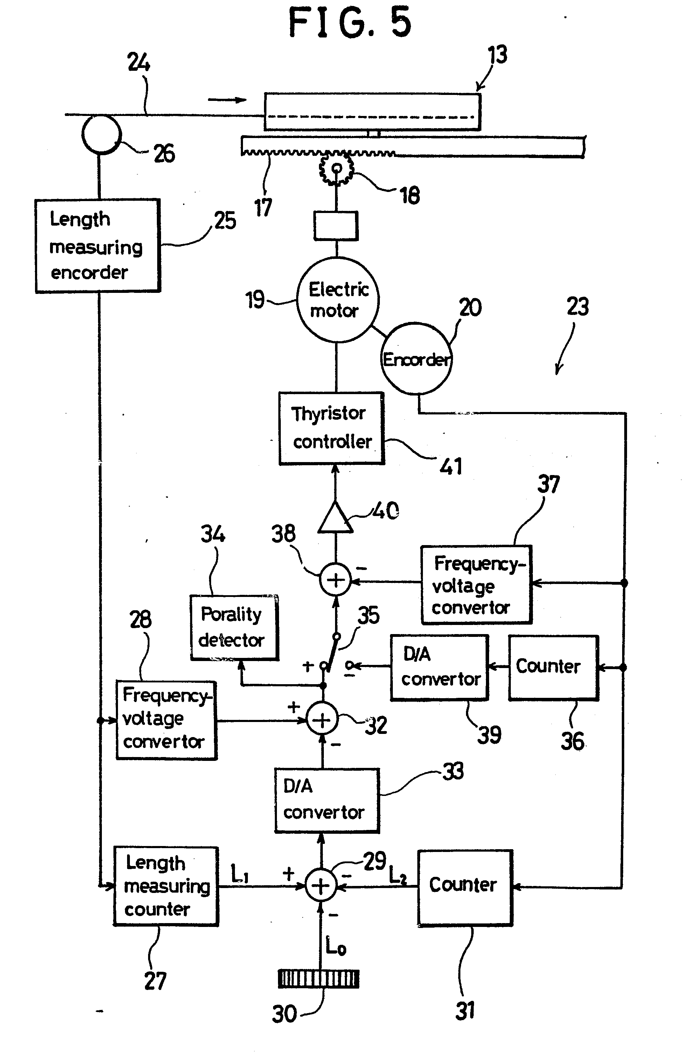

According to the present invention, as shown in Fig. 3 and Fig. 5, there is provided the electric motor 19 for driving the assembly 13 through a pinion 18, a rack 17 meshed therewith, and a connecting member 16 attached thereto; additionally there is provided an electronic control means 23 for controlling the electric motor 19 such that the carrying members 3 may be moved in the same direction as a raw material member 24 and the cutting blades 1 may be set in position at predetermined respective positions of the raw material member 24, and after cutting of the raw material member 24 by the cutting blades 1, the carrying members 3 may be returned at a high speed to their starting positions. Numeral 22 denotes an electric motor for cooling the electric motor 19.

Fig. 5 is a block diagram showing one example of the foregoing electronic control apparatus 23. Referring to this Figure, numeral 25 denotes a length measuring encoder which is arranged to be driven by a length measuring roller 26 brought in rotary contact with the raw material member 24 and which is arranged to generate a predetermined number of length measuring pulses in relation to a movement of a unit length of the raw material member 24.

Numeral 27 denotes a length measuring counter which is triggered to start counting the length measuring pulses by a detection signal of a detector (not illustrated) for detecting a mark applied to the raw material member 24, with the counted value corresponding to a displacement of the raw material member 24.

Numeral 28 denotes a frequency-voltage convertor which serves to convert the length measuring pulses into a speed signal corresponding to the speed of the raw material member 24.

Numeral 29 denotes an adder for obtaining the difference between the counted value $L_1$ obtained from the length measuring counter 27 and the sum of the cutting length $L_0$ set by a marginal cutting length setting means 30 and the counted value $L_2$ obtained from a counter 31.

Numeral 32 denotes an analogue adder for obtaining the difference between the speed signal obtained from the frequency-voltage converter 28 and an analogue output signal of a D/A converter 33.

Numeral 34 denotes a polarity detector for changing over a changeover switch 35 in accordance with the polarity of the output of the analogue adder 32.

Numeral 20 denotes an encoder for generating a predetermined number of pulses in relation to a movement of a unit length of the assembly 13 which is connected to the electric motor 19.

Numeral 36 denotes a counter for counting the output pulses of the encoder 20 with the counted value therefrom corresponding to a displacement of the assembly 13.

Numeral 37 denotes a frequency-voltage convertor for converting the output pulses of the encoder 20 into a speed signal corresponding to a speed of the assembly 13.

Numeral 38 denotes an adder for adding either the output of the adder 32 of the D/A converter 39 which are connected selectively thereto through the changeover switch 35 to the output of the frequency-voltage convertor 37. The adder 38 is connected at its output side through an amplifier 40 to a thyristor control means 41, which has a circuit (not shown) for limiting the maximum electric current flowing to the electric motor 19.

Next, the operation of the apparatus will be explained as follows:-

If the raw material member 24 is driven to be moved in the direction of an arrow shown in Fig. 2 and Fig. 5, a mark applied to the raw material 24 is detected by the detecting means, and the length measuring pulses from the length measuring encoder 25 are counted by the length measuring counter 27, and the displacement of the raw material member 24 is measured. When the displacement thereof is less then the marginal cutting length $L_0$ set in the marginal cutting length setting means 30, and the output of the D/A convertor 33 is larger than the output of the frequency-voltage convertor 28, the output of the adder 32 becomes negative in polarity; thus the changeover switch 35 is

0195677

connected to the D/A convertor 39 side by the action of the polarity detector 34 and consequently the electric motor 19 cannot be driven.

If the displacement of the raw material member 24 becomes near the cutting length, the output of the analogue adder 32 turns positive in polarity, and the changeover switch 35 is connected to the adder 32 side, so that the output signal of the adder is applied to the thyristor control means 41 through the analogue adder 38 and the amplifier 40, and the electric motor 19 begins to be driven by the output thereof. Thereby, the assembly 13 begins to be moved, in the same direction as the direction of motion of the raw material member 24, by means of the rack 17 and the pinion 18.

The encoder 20 is driven to rotate by the rotation of the electric motor 19, and output pulses thereof are converted into a voltage corresponding to the frequency thereof by the action of the frequency-voltage convertor 37, and the converted output corresponds to the speed of the assembly 13; this output is applied to the analogue adder 38 and acts such that it is subtracted from the input from the switch 35. The output pulses of the encoder 20 are inputted also to the counter 36 and the counter 31, and are counted as the displacement of the assembly 13 by the respective counters. The counted value $L_2$ of the counter 31 is inputted to the adder 29 so as to be effectively added to the marginal cutting length $L_0$ of the marginal cutting length setting means 30.

When the displacement of the raw material member relative to the assembly, that is, a value $L_1 - L_2$ between the forward end of the raw material member 24 and the cutting blade 1 positioned on the right hand end, approaches the set marginal cutting length $L_0$, the system reaches a steady state situation, in which the velocity of the assembly becomes constant and equal to that of the raw material member 24, and the output $L_1 - (L_0 + L_2)$ of the adder 29 becomes equal to zero.

On reaching this condition, a cutting instruction by an output of the adder 29, for instance, is given to the air cylinder 5, so that the air cylinder 5 is extended, and at the same time the eight sets of cutting blades are simultaneously rotated and brought into pressure contact with the peripheral surface of the raw material member 24. Thus, the raw material member 24 is cut at eight positions, so that seven tubular container barrels can be produced. After the completion of cutting, a cutting completion signal is issued by a limit switch (not illustrated), which is built in the assembly 13, and this signal is applied to the length measuring counter 27 to reset it to zero.

As a result thereof, the outputs of the adder 29 and the D/A convertor 33 become large, so that the output of the analogue adder 32 becomes negative in polarity, and the switch 35 is changed over to the D/A convertor 39 side.

The D/A convertor 39 acts to convert the counted value of the counter 36, which shows the moved length of the assembly 13, into an analogue signal, and the output thereof is given to the adder 38 with the same polarity as the output of the frequency-voltage convertor 37 at that time. Accordingly, the input of the amplifier 40 becomes negative, and the electric motor 19 is first decelerated and then rotated in the reverse direction, and the assembly 13 begins to be moved in the direction opposite to the direction of motion of the raw material member 24.

Thus, the output of the frequency-voltage convertor 37 is reversed in polarity relative to its output at the time when the assembly 13 is moved in the direction of motion of the raw material member 24, and the counter 36 counts so as to subtract the pulses of the encoder 20 from the previously counted value. As a result thereof, if the assembly 13 is moved backwards by the same distance that it was previously moved forward together with the raw material member 24, the output of the counter 36 becomes near zero, so that the assembly 13 stops at its start position.

The foregoing operation is repeated each time the detector detects a mark on the raw material member 24.

In such a case that one cycle time TT of a reciprocating motion of the assembly 13 is constant, it is necessary that a cutting time $T_1$ for cutting the raw material member 24 by the cutting blades 1 of the carrying members 3 moving at the same speed as the speed $V_1$ of the raw material member 24 is as long as possible. For this purpose and in relation therewith, as shown clearly in Fig. 4, it is contemplated that the return movement time $T_2$ of the carrying members 3 is shortened, in other words, the return movement speed $V_2$ of the cutting blades 1 is larger than the speed $V_1$ of the raw material member so that a predetermined adjusting time $T_3$ may be taken before the next reciprocating movement is made.

With the electronic control means as described above, the acceleration of the carrying members 3 up to the speed $V_1$ and the deceleration thereof until the stop can be made linear and made to last as short a time as possible by forming the characteristic of the D/A convertor 33 into a non-linear one.

The return movement speed $V_2$ can be set to be the highest allowable reverse speed by properly adjusting a limit value for the output of the D/A convertor 39.

Additionally, the acceleration during the return movement thereof up to $V_2$ can be made constant to obtain a minimum time for this acceleration by setting the highest allowable torque of the electric motor by the thyristor control means 41.

The deceleration up to stop thereof from the speed $V_2$ can be made constant and carried out in the minimum time by forming the characteristic of the D/A convertor 39 into a non-linear one.

Thus, in an apparatus according to this invention, of the type hereinabove described, unlike the conventional apparatus, the carrying members can be moved without receiving an impact, the reliability of the apparatus is increased, the apparatus can be reduced in size and in cost, and, additionally, the raw material member can be cut at extremely accurate positions, and the carrying members can be returned to their start positions extremely accurately; thus waste marginal cuttings resulting from the repeated cutting of the raw material member can be decreased.

CLAIMS

1. An apparatus for cutting an elongate member, the apparatus comprising a plurality of cutter carriers which are distributed longitudinally of the elongate member, the elongate member and the cutter carriers being movable in the axial direction of the elongate member while cutters on the cutter carriers are operative to cut the elongate member, characterised in that an electric motor is provided for displacing the cutter carriers, and electronic control means is provided for controlling the motor such that, in use of the apparatus to cut an elongate member, the cutters are made operative when the cutters and the elongate member are in predetermined relative positions and, when the elongate member has been cut, the cutter carriers are returned to their original positions.

2. An apparatus as claimed in any preceding claim, characterised in that the motor drives the cutter carriers through a rack and pinion transmission.

3. An apparatus as claimed in claim 1 or 2, characterised in that the electronic control means comprises a thyristor controller.

4. An apparatus as claimed in any preceding claim, characterised in that the electronic control means comprises:

first displacement monitoring means, adapted to deliver a first displacement signal representing displacement of the elongate member;

second displacement monitoring means, adapted to deliver a second displacement signal representing displacement of the cutters;

first velocity monitoring means, adapted to deliver a first velocity signal representing the velocity of the elongate member; and

second velocity monitoring means, adapted to deliver a second velocity signal representing the velocity of the elongate member.

5. An apparatus as claimed in claim 4, characterised in that each displacement monitoring means comprises a counter for counting encoder output signals, each encoder output signal corresponding to a predetermined displacement, and in that each velocity monitoring means comprises a frequency-voltage convertor for generating an output voltage corresponding to the frequency of the encoder output signals.

6. An apparatus as claimed in claim 4 or claim 5, characterised in that the electronic control means comprises a cutting length setting means, and a first adder for delivering an output corresponding to the difference between the first displacement signal and the sum of the second displacement signal and a predetermined cutting length signal delivered by the cutting length setting means.

7. An apparatus as claimed in claim 6, characterised in that the control means comprises a second adder for delivering an output corresponding to the difference between the first velocity signal and the output of the first adder.

8. An apparatus as claimed in claim 7, characterised in that the electronic control means comprises a changeover switch responsive to the polarity of the output of the second adder for providing an output which corresponds either to the output of the second adder or to the second displacement signal, the electronic control means further comprising a third adder for providing an output corresponding to the difference between the output of the changeover switch and the second velocity signal.

9. An apparatus as claimed in any one of claims 6 to 8, characterised in that the cutters are made operative when the difference between the first and second displacement signals is equal to the predetermined cutting length signal, and the first and second velocity signals are equal.

# F I G. 1

# F I G. 4

0195677

FIG.2

# F I G. 3

4/4

FIG. 5

0195677